# EUROPÄISCHE PATENTSCHRIFT

(11) **EP 2 087 819 B1**
(45) Veröffentlichungstag und Bekanntmachung des Hinweises auf die Patenterteilung: **02.11.2011**
(21) Anmeldenummer: 08169454.9
(22) Anmeldetag: 19.11.2008
(51) Int. Cl.: A47J 31/10, A47J 31/44

(54) **Maschine zur Zubereitung eines Getränks**
Machine for preparing a drink
Machine destinée à la préparation d'une boisson

(30) Priorität: 05.02.2008 DE 202008001636 U
(43) Veröffentlichungstag der Anmeldung: 12.08.2009
(73) Patentinhaber: MELITTA HAUSHALTSPRODUKTE GmbH & Co. Kommanditgesellschaft, 32427 Minden (DE)
(72) Erfinder: Sachtleben, Andreas, 32427, Minden (DE)
(74) Vertreter: Dantz, Jan Henning

(56) Entgegenhaltungen:
- EP-A- 1 154 246
- FR-A- 2 820 500
- GB-A- 291 676
- GB-A9- 2 332 522

## Beschreibung

Die vorliegende Erfindung betrifft eine Maschine zur Zubereitung eines Getränkes, insbesondere Kaffee, mit einem Wassertank, von dem Wasser zu einer Brüheinrichtung förderbar ist, wobei Anzeigemittel vorgesehen sind um die Füllstandshöhe in dem Wassertank anzuzeigen.

Es gibt Kaffeemaschinen, die einen abnehmbaren Wassertank aufweisen, der in einem rückseitigen Bereich der Maschine angeordnet ist. Für den Nutzer einer solchen Kaffeemaschine ist es hilfreich zu wissen, wie viel Wasser sich während des Brühvorganges im Wassertank befindet, so dass der Brühfortschritt visualisiert wird. Hierfür gibt es durchsichtige Wassertanks, so dass der Nutzer erkennen kann, welche Füllstandshöhe in dem Wassertank vorhanden ist. Dabei ist problematisch, dass die Füllstandshöhe bei schlechten Lichtverhältnissen nicht gut erkennbar ist. Zudem ist der Wassertank meist in einem rückseitigen Bereich des Gerätes angeordnet, der schlecht einsehbar ist.

Die GB 2 332 522 A offenbart ein Anzeigemittel zur Anzeige des Flüssigkeitsstandes in einem Flüssigkeitsbehälter, wobei dieses Mittel an einer Wand installiert ist oder in eine Wand eingelassen ist. Dabei kann dieses Anzeigemittel als Sichtglasformteil in einer Ausnehmung innerhalb des Flüssigkeitsbehälters angeordnet sein. In dem Sichtglasformteil ist ein Leuchtmittel als LED angeordnet. Der Flüssigkeitsbehälter kann beispielsweise auch in einer Kaffeemaschine eingesetzt werden.

Die EP 1 154 246 offenbart eine Füllstandsanzeige, beispielsweise auch für Kaffeemaschinen und Wasserkocher, welche unter anderem eine Lichtquelle sowie einen Lichtleiter aufweist. Dadurch werden optische Effekte dadurch erreicht, dass ein Schwimmkörper zur Füllstandsanzeige unter anderem eine reflektierende Oberfläche aufweist oder aus einem stark lichtstreuenden Material besteht, um das Licht von der Lichtquelle ausgesandte Licht an den Nutzer optisch sichtbar weiterzugeben.

Es ist daher Aufgabe der vorliegenden Erfindung eine Maschine zur Zubereitung eines Getränks zu schaffen, bei der die Füllstandshöhe in einem Wassertank auch bei schlechten Lichtverhältnissen gut sichtbar ist.

Diese Aufgabe wird mit einer Maschine mit den Merkmalen des Anspruches 1 gelöst.

Erfindungsgemäß umfassen die Anzeigemittel zur Anzeige der Füllstandshöhe in dem Wassertank Leuchtmittel, die einen im Wassertank geführten Schwimmer anstrahlen. Dadurch kann die Füllstandshöhe auf einfache Weise visualisiert werden, wobei der Schwimmer durch die Beleuchtung entweder direkt gut sichtbar ist oder indirekt das Licht zu einer Anzeigefläche reflektieren kann, die dann für den Benutzer gut sichtbar ist.

Erfindungsgemäß ist zwischen einer Rückwand der Maschine benachbart zu dem Wassertank und einer Vorderwand der Maschine ein oder mehrere horizontale Lichtleiter vorgesehen. Diese Lichtleiter können das reflektierte Licht von dem Schwimmer gezielt zu einer Position an die Vorderseite der Maschine lenken, wobei der Lichtleiter auch eine Führung des Lichtes in horizontale und/oder vertikale Richtung übernehmen kann.

Gemäß einer bevorzugten Ausgestaltung der Erfindung weist der Schwimmer eine Reflektionsfläche auf, mittels der einfallendes Licht zu einer Anzeigefläche der Maschine reflektiert wird. Dadurch kann die Position der Anzeigefläche günstig positioniert werden, beispielsweise an einer Vorderseite der Maschine. Der Benutzer wird daher mit einem Blick über den Brühfortschritt informiert. Vorzugsweise ist dabei der Wassertank an einer Rückseite der Maschine und die Anzeigefläche an einer Vorderseite der Maschine angeordnet.

Um die Anzeigefläche dezent auszugestalten, kann dieser als vertikaler Streifen ausgebildet sein. Dieser vertikale Streifen kann dabei in eine Vielzahl von Anzeigefeldern unterteilt sein, so dass der Benutzer auf einfache Weise auch ein Füllvolumen an der Anzeigefläche ablesen kann.

Damit die Maschine kompakt aufgebaut ist, kann das Leuchtmittel unterhalb des Wassertanks angeordnet sein. Um den Energieverbrauch durch die Anzeigemittel gering zu halten, kann das Leuchtmittel dabei als LED-Leuchte ausgebildet sein, die beispielsweise an einer Leiterplatte unterhalb des Wassertanks angeordnet ist.

Gemäß einer weiteren Ausgestaltung der Erfindung ist der Schwimmer entlang einer vertikalen Leiste in dem Wassertank geführt. Dadurch kann die Position des Schwimmers in dem Wassertank relativ exakt vorbestimmt werden, da dieser entlang der vertikalen Leiste bewegbar ist. Die vertikale Leiste kann dabei den Schwimmer U-förmig umgreifen, um Bewegungen in horizontale Richtungen zu minimieren.

Vorzugsweise umfasst der Schwimmer einen Spiegel, der beidseitig von einem Schwimmerelement umgeben ist. Dadurch behindern die Schwimmerelemente die Lichtpfade nicht, aber das Schwimmerelement mit dem Spiegel bleibt in einer vorbestimmten Position ausgerichtet und es werden Kippbewegungen vermieden. Vorzugsweise ist der Spiegel dabei in einem Winkel von etwa 45° zur Horizontalen geneigt angeordnet, so dass ein Lichtstrahl von einer Position unterhalb des Wassertanks in eine horizontale Richtung abgelenkt wird.

Um die Lichtverluste zwischen dem Leuchtmittel und der Anzeigefläche zu minimieren, ist der Wassertank vorzugsweise aus einem transparenten oder transluzenten Kunststoff hergestellt, zumindest im Bereich von Sichtfenster zur Durchführung der Lichtpfade.

Um den Lichteinfall zu dem Schwimmer zu bündeln, kann zwischen dem Leuchtmittel und dem Wassertank eine Linse vorgesehen sein, so dass die Intensität des Lichteinfalls erhöht wird.

Die Erfindung wird nachfolgend anhand eines Ausführungsbeispieles mit Bezug auf die beigefügten Zeichnungen näher erläutert. Es zeigen:

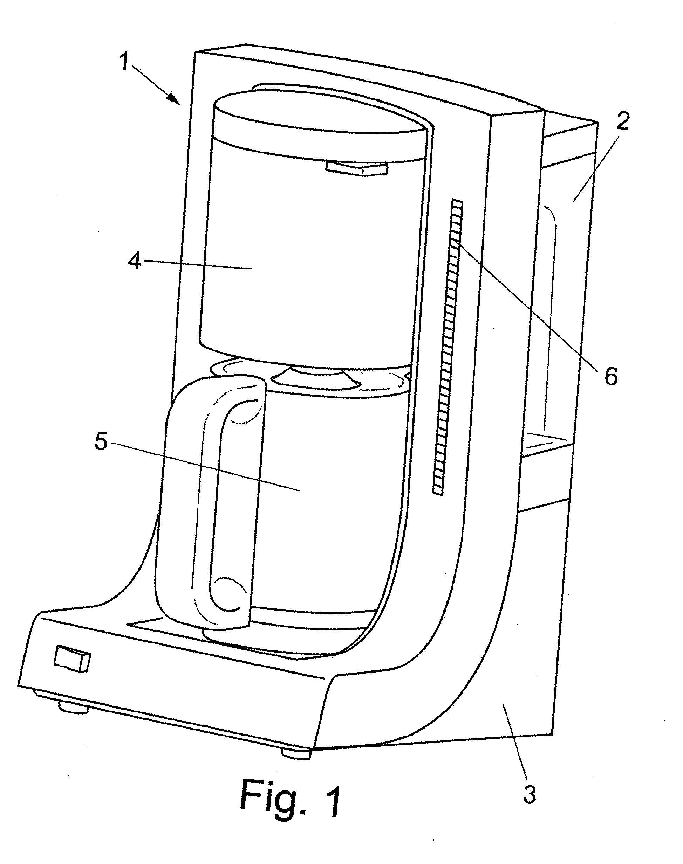

- Figur 1: eine perspektivische Ansicht eines Ausführungsbeispieles einer erfindungsgemäßen Maschine;
- Figur 2: eine teilweise geschnittene Seitenansicht der Maschine der Figur 1;
- Figur 3: eine Detailansicht der Maschine der Figur 1, und
- Figur 4: eine geschnittene Draufsicht auf ein Detail der Maschine der Figur 1.

Eine Maschine 1 zur Zubereitung eines Getränkes, insbesondere Kaffee oder Tee, umfasst einen Wassertank, aus dem Wasser zu einer Brüheinrichtung förderbar ist, die heißes Wasser in eine Filtereinrichtung 4 fördert, von dem das Getränk in eine Kanne 5 herunterläuft. Die Maschine 1 umfasst ein Gestell 3 mit einem Gehäuse, in dem die einzelnen Baugruppen untergebracht sind. An einer Vorderseite des Gehäuses 3 ist eine Anzeigefläche 6 vorgesehen, die als vertikaler Streifen ausgebildet ist und die eine Brühfortschrittsanzeige bildet. Die Anzeigefläche 6 ist in eine Vielzahl von Feldern unterteilt.

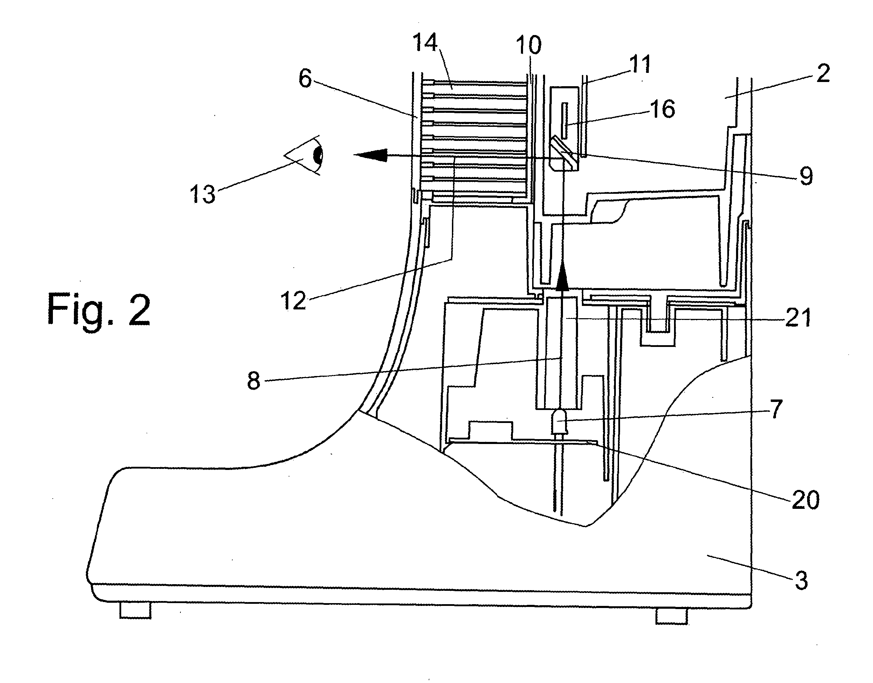

In Figur 2 ist die Vorrichtung zur Anzeige des Füllstandes in dem Wassertank 2 schematisch dargestellt. Unterhalb des Wassertankes 2 ist ein Leuchtmittel 7 in Form einer LED-Leuchte angeordnet, die an einer Leiterplatte 20 in dem Gehäuse 3 montiert ist. Von der Leuchte 7 strahlt Licht nach oben ab, wie dies schematisch durch den Pfeil 8 dargestellt ist. Das Licht wird zunächst in einem Rohr 21 gebündelt, an dessen Ende eine Linse vorgesehen ist. Dadurch wird der gebündelte Lichtstrahl zu einem Schwimmer geleitet, der eine reflektierende Fläche in Form eines Spiegels besitzt. Dieser Spiegel ist dabei als rechteckförmige Platte ausgebildet, die in einem Winkel von etwa 45° zur Horizontalen geneigt ist. Dadurch wird das einfallende Licht mit dem Strahl 8 abgelenkt in eine horizontale Richtung, wie dies mit dem Pfeil 12 schematisch dargestellt ist. Der abgelenkte Lichtstrahl 12 trifft nun auf einen Lichtleiter 14, der das Licht zu der Anzeigefläche 6 an der Vorderseite der Maschine 1 leitet, so dass der Benutzer 13 von einer Vorderseite der Maschine 1 unmittelbar die Höhe des Schwimmers 9 an der Anzeigefläche 6 ablesen kann. Der Lichtstrahl 12 tritt an der Stelle aus einem Feld der Anzeigefläche 6 aus, auf dessen Höhe sich der Schwimmer 9 befindet.

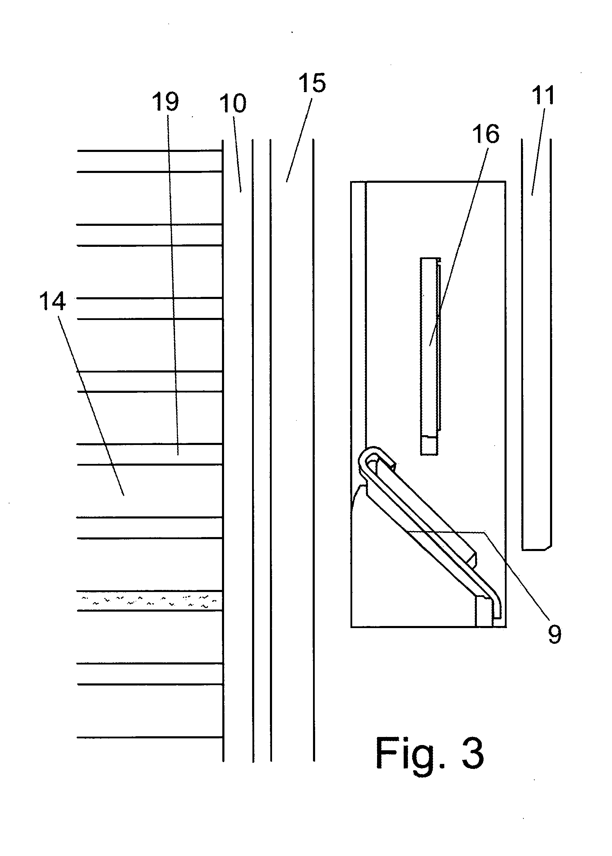

In Figur 3 ist der Bereich des Schwimmers 9 vergrößert dargestellt. Der Schwimmer 9 umfasst ein oder mehrere Schwimmelemente 16, die entlang einer vertikalen Leiste 11 geführt sind. Das Licht tritt nach dem Schwimmer 9 zunächst durch eine Wand 15 des Wassertanks 2 und dann durch eine Wand 10 des Gehäuses 3, die aus transparentem und/oder transluzentem Material gebildet sind. Anschließend gelangt der Lichtstrahl durch einen Lichtleiter 14, wobei benachbarte Lichtleiter 14 durch Trennwände 19 voneinander getrennt sind, die eine optische Abschirmung ermöglichen. Dadurch wird nur eine begrenzte Anzahl von Feldern, vorzugsweise nur ein Feld an der Anzeigefläche 6 jeweils beleuchtet.

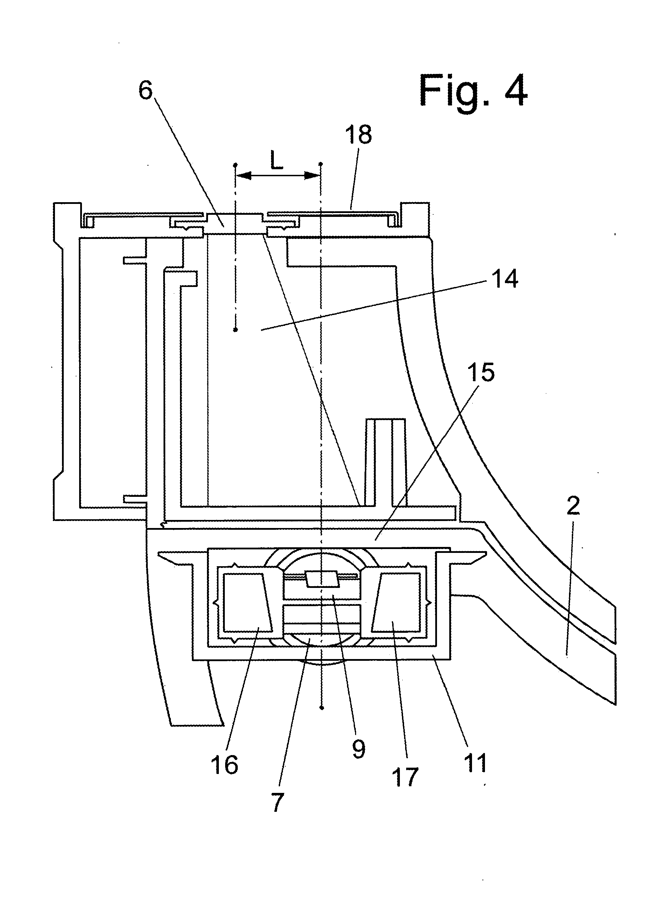

In Figur 4 ist der Bereich des Schwimmers 9 in Draufsicht dargestellt. Die vertikale Leiste 11 umgreift den Schwimmer 9 U-förmig, wobei zu beiden Seiten des Spiegels an dem Schwimmer 9 jeweils ein Schwimmelement 16 bzw. 17 vorgesehen ist, das innerhalb der U-förmigen Leiste 11 angeordnet ist. Dadurch wird erreicht, dass der Schwimmer 9 weitgehend vertikal mit nur geringem Spiel an der Leiste 11 geführt ist und somit eine exakte Lichtlenkung möglich ist.

Durch den Lichtleiter 14 ist es möglich, eine breite Eintrittsfläche auf der zu dem Schwimmer 9 gewandten Seite zu verjüngen, so dass die Anzeigefläche 6 als schmale vertikale Leiste ausgebildet ist. Benachbart zu der Anzeigefläche 6 sind Zierblenden 18 vorgesehen, die die vertikale Anzeigefläche 6 einfassen. Durch die Lichtleiter 14 kann ein Bereich des Lichteintrittes und des Lichtaustrittes seitlich versetzt werden, wie dies durch den Abstand L angedeutet ist. Dadurch kann der Bauraum innerhalb des Gehäuses 3 optimal genutzt werden.

In dem dargestellten Ausführungsbeispiel wird der Schwimmer 9 beleuchtet, der dann das Licht zur Vorderseite der Maschine hin reflektiert. Dabei ist es möglich, die Anzahl der Bauteile zwischen der Vorderseite und dem Schwimmer 9 zu reduzieren um den Aufbau der Maschine zu vereinfachen. Der Schwimmer 9 kann auch direkt von einer Vorderseite durch ein vertikales Sichtfenster sichtbar bleiben, wobei durch das Anstrahlen mittels der Leuchte die Füllstandshöhe in dem Wassertank gut sichtbar bleibt.

## Patentansprüche

1. Maschine (1) zur Zubereitung eines Getränks, insbesondere Kaffee, mit einem Wassertank (2), von dem Wasser zu einer Brüheinrichtung förderbar ist, wobei Anzeigemittel (6, 7, 9) vorgesehen sind, um die Füllstandshöhe in dem Wassertank (2) anzuzeigen, wobei die Anzeigemittel (6) Leuchtmittel (7) umfassen, die einen im Tank geführten Schwimmer anstrahlen, **dadurch gekennzeichnet, dass** zwischen einer Rückwand der Maschine (1) benachbart zu dem Wassertank (2) und einer Vorderwand der Maschine (1) horizontale Lichtleiter (14) vorgesehen sind.

2. Maschine nach Anspruch 1, **dadurch gekennzeichnet, dass** der Schwimmer (9) eine Reflektionsfläche aufweist, mittels dem einfallendes Licht (8) zu einer Anzeigefläche (6) der Maschine (1) reflektiert wird.

3. Maschine nach Anspruch 1 oder 2, **dadurch gekennzeichnet, dass** der Wassertank (2) an einer Rückseite der Maschine (1) und die Anzeigefläche (6) an einer Vorderseite der Maschine (1) angeordnet ist.

4. Maschine nach einem der Ansprüche 1 bis 3, **dadurch gekennzeichnet, dass** die Anzeigefläche (6) als vertikaler Streifen ausgebildet ist, der eine Vielzahl von Anzeigefeldern aufweist.

5. Maschine nach einem der Ansprüche 1 bis 4, **dadurch gekennzeichnet, dass** die Leuchtmittel (7) unterhalb des Wassertanks (2) angeordnet sind.

6. Maschine nach einem der Ansprüche 1 bis 5, **dadurch gekennzeichnet, dass** die Leuchtmittel (7) als LED-Leuchten ausgebildet sind.

7. Maschine nach einem der Ansprüche 1 bis 6, **dadurch gekennzeichnet, dass** der Schwimmer (9) entlang einer vertikalen Leiste (11) in dem Wassertank (2) geführt ist.

8. Maschine nach Anspruch 7, **dadurch gekennzeichnet, dass** die vertikale Leiste (11) den Schwimmer (9) U-förmig umgreift.

9. Maschine nach einem der Ansprüche 1 bis 8, **dadurch gekennzeichnet, dass** der Schwimmer (9) einen Spiegel umfasst, der beidseitig von einem Schwimmerelement (16, 17) umgeben ist.

10. Maschine nach Anspruch 9, **dadurch gekennzeichnet, dass** der Spiegel in einem Winkel von etwa 45° zur Horizontalen geneigt angeordnet ist.

11. Maschine nach einem der Ansprüche 1 bis 10, **dadurch gekennzeichnet, dass** der Wassertank (2) aus einem transparenten oder einem transluzenten Kunststoff hergestellt ist.

12. Maschine nach einem der Ansprüche 1 bis 11, **dadurch gekennzeichnet, dass** zwischen dem Leuchtmittel (7) und dem Wassertank (2) eine Linse vorgesehen ist.

## Claims

1. Machine (1) for preparing a beverage, particularly coffee, comprising a water tank (2) from which water can be conveyed to a brewing device, wherein indicating means (6, 7, 9) are provided in order to indicate the filling level height in the water tank (2), wherein the indicating means (6) comprise lighting means (7) which irradiate a float guided in the tank, **characterised in that** a horizontal optical conductor (14) is provided between a back wall of the machine (1) adjacent to the water tank (2) and a front wall of the machine (1).

2. Machine according to claim 1, **characterised in that** the float (9) has a reflective surface by means of which incident light (8) is reflected to an indicating surface (6) of the machine (1).

3. Machine according to claim 1 or 2, **characterised in that** the water tank (2) is arranged at a rear side of the machine (1) and the indicating surface (6) is arranged at a front side of the machine (1).

4. Machine according to any one of claims 1 to 3, **characterised in that** the indicating surface (6) is constructed as a vertical strip having a plurality of indicating fields.

5. Machine according to any one of claims 1 to 4, **characterised in that** the lighting means (7) is arranged underneath the water tank (2).

6. Machine according to any one of claims 1 to 5, **characterised in that** the lighting means (7) are constructed as light-emitting diode lights.

7. Machine according to any one of claims 1 to 6, **characterised in that** the float (9) is guided along a vertical strip (11) in the water tank (2).

8. Machine according to claim 7, **characterised in that** the vertical strip (11) engages around the float (9) in U shape.

9. Machine according to any one of claims 1 to 8, **characterised in that** the float (9) comprises a reflector which is surrounded at both sides by a float element (16, 17).

10. Machine according to claim 9, **characterised in that** the reflector is arranged to be inclined at an angle of approximately 45° to the horizontal.

11. Machine according to any one of claims 1 to 10, **characterised in that** the water tank (2) is made of a transparent or a translucent synthetic material.

12. Machine according to any one of claims 1 to 11, **characterised in that** a lens is provided between the lighting means (7) and the water tank (2).

## Revendications

1. Machine (1) pour préparer une boisson, notamment du café, comportant :
- un réservoir d'eau (2) pour l'eau alimentant une installation de chauffage d'eau,
- des moyens d'affichage (6, 7, 9) pour indiquer le niveau de remplissage du réservoir (2),
- les moyens d'affichage (6) comportant des moyens lumineux (7) éclairant un flotteur guidé dans le réservoir,
machine **caractérisée par**
- des guides de lumière (14) horizontaux entre la paroi arrière de la machine (1) au voisinage du réservoir d'eau (2) et la paroi avant de la machine (1).

2. Machine selon la revendication 1,
**caractérisée en ce que**
le flotteur (9) a une surface réfléchissante pour réfléchir la lumière incidente (8) vers la surface d'affichage (6) de la machine (1).

3. Machine selon la revendication 1 ou 2,
**caractérisée en ce que**
le réservoir d'eau (2) est sur le côté arrière de la machine (1) et la surface d'affichage (6) est sur le côté avant de la machine (1).

4. Machine selon l'une des revendications 1 à 3,
**caractérisée en ce que**
la surface d'affichage (6) est formée de bandes verticales comportant plusieurs champs d'affichage.

5. Machine selon l'une des revendications 1 à 4,
**caractérisée en ce que**
des moyens lumineux (7) sont prévus sous le réservoir d'eau (2).

6. Machine selon l'une des revendications 1 à 5,
**caractérisée en ce que**
les moyens lumineux (7) sont des photodiodes LED.

7. Machine selon l'une des revendications 1 à 6,
**caractérisée en ce que**
le flotteur (9) est guidé le long d'une barrette verticale (11) dans le réservoir d'eau (2).

8. Machine selon la revendication 7,
**caractérisée en ce que**
la barrette verticale (11) en forme de U entoure le flotteur (9).

9. Machine selon l'une des revendications 1 à 8,
**caractérisée en ce que**
le flotteur (9) comporte un miroir dont les deux faces sont entourées par un élément de flotteur (16, 17).

10. Machine selon la revendication 9,
**caractérisée en ce que**
le miroir est incliné d'un angle d'environ 45° par rapport à la direction horizontale.

11. Machine selon l'une des revendications 1 à 10,
**caractérisée en ce que**
le réservoir d'eau (2) est en une matière plastique transparente ou translucide.

12. Machine selon l'une des revendications 1 à 11,
**caractérisée par**
une lentille entre le moyen lumineux (7) et le réservoir d'eau (2).
